# EUROPÄISCHE PATENTSCHRIFT

(11) **EP 3 976 309 B1**
(45) Veröffentlichungstag und Bekanntmachung des Hinweises auf die Patenterteilung: **15.10.2025**
(21) Anmeldenummer: 20743054.7
(22) Anmeldetag: 25.05.2020
(51) Int. Cl.: B23Q 1/66, B27M 1/08

(54) **WERKSTÜCK-BEREITSTELLUNGSGRUPPE FÜR EINE BEARBEITUNGSSTATION**
WORKPIECE-PROVIDING ASSEMBLY FOR A PROCESSING STATION
GROUPE DE FOURNITURE DE PIÈCES À USINER POUR UNE STATION DE TRAITEMENT

(30) Priorität: 27.05.2019 DE 102019003699
(43) Veröffentlichungstag der Anmeldung: 06.04.2022
(73) Patentinhaber: Zimmer, Martin, 77866 Rheinau (DE); Zimmer, Günther, 77866 Rheinau (DE)
(72) Erfinder: Zimmer, Martin, 77866 Rheinau (DE); Zimmer, Günther, 77866 Rheinau (DE)
(74) Vertreter: Thämer, Wolfgang
(86) Internationale Anmeldenummer: PCT/DE2020/000106
(87) Internationale Veröffentlichungsnummer: WO 2020/239153

(56) Entgegenhaltungen:
- EP-A1- 2 168 714
- EP-A1- 2 796 259
- WO-A1-2018/121809
- US-A- 5 220 715

## Beschreibung

Die Erfindung betrifft eine Werkstück-Bereitstellungsgruppe für eine Bearbeitungsstation mit einem mindestens eine Schiene tragenden Schienentragkörper und mit einer, eine Fixiereinheit aufweisenden Stützvorrichtung, wobei der Schienentragkörper mindestens eine zweite, zur erstgenannten Schiene parallele oder koaxiale Schiene trägt, wobei mindestens zwei normal zur Schienenlängsrichtung orientierte, zueinander in der Schienenlängsrichtung beabstandete Normalenebenen die erste Schiene und die zweite Schiene durchdringen, wobei die Fixiereinheit zwischen den genannten Normalenebenen relativ zu den Schienen zwischen einer Bereitschaftsposition, einer ersten Arbeitslage und einer zweiten Arbeitslage verfahrbar ist, wobei in der ersten Arbeitslage ein entlang der ersten Schiene führbares Werkstück mittels der Fixiereinheit flächig anliegend fixierbar ist und wobei in der zweiten Arbeitslage ein entlang der zweiten Schiene führbares Werkstück mittels der Fixiereinheit flächig anliegend fixierbar ist sowie eine Bearbeitungsstation mit einer derartigen Werkstück-Bereitstellungsgruppe und mit einer verfahrbaren und/oder schwenkbaren Werkzeugeinheit.

Aus der DE 10 2017 012 075 A1 und aus der WO 2018/121 809 A1 sind Bearbeitungsstationen zum Bearbeiten von Platten- und/oder brettartigen Werkstücken bekannt.

Die US 5 220 715 A offenbart eine Vorrichtung zur Bearbeitung von Leiterplatten, in der die einzelne Leiterplatte mittels eines Kettenförderers an eine Übergabestation gefördert wird. An der Übergabestation wird die Leiterplatte vom Kettenförderer abgehoben und auf einen verfahrbaren Werkzeugtisch gekippt. Dieser Werkzeugtisch verfährt mit dem aufliegenden Werkstück in eine Bearbeitungsposition. Nach der Bearbeitung wird die Platine analog an eine zweite Fördervorrichtung übergeben.

Der vorliegenden Erfindung liegt die Problemstellung zugrunde, den Nutzungsgrad und die Ausbringungsrate einer Bearbeitungsstation zu erhöhen.

Diese Problemstellung wird mit den Merkmalen des Hauptanspruches gelöst. Dazu ist die Fixiereinheit höhenverstellbar.

Die Werkstück-Bereitstellungsgruppe verfügt über zwei Schienen, auf denen alternativ Werkstücke zur Bearbeitung bereitgestellt werden können. An der Bearbeitungsstation wird das Werkstück mittels einer verfahrbaren und/oder schwenkbaren Fixiereinheit gehalten. Diese Fixiereinheit hat die Funktion eines Werkstücktisches. Bei Lage der Fixiereinheit in der Bereitschaftsposition kann sowohl ein Werkstück auf der ersten Schiene als auch ein Werkstück auf der zweiten Schiene die Stützvorrichtung problemlos passieren. Nach dem Positionieren des zu bearbeitenden Werkstücks vor der Fixiereinheit wird diese in eine das jeweilige, auf der ersten oder auf der zweiten Schiene sitzende Werkstück haltende Arbeitslage bewegt. Die Fixiereinheit bewegt sich hierbei innerhalb eines durch zwei Normalenebenen der Schienenlängsrichtungen begrenzten Arbeitsraums. Das Werkstück kann nun bearbeitet werden. Nach Beendigung der Bearbeitung und dem Zurückfahren der Fixiereinheit wird das bearbeitete Werkstück aus dem Arbeitsraum heraus verfahren, während das bereitgestellte nächste Werkstück in den Arbeitsraum eingefahren wird.

Weitere Einzelheiten der Erfindung ergeben sich aus den Unteransprüchen und der nachfolgenden Beschreibung schematisch dargestellter Ausführungsformen.
- Figur 1:: Werkstück-Bereitstellungsgruppe einer Bearbeitungsstation mit schienentragendem Schienentragkörper und Stützvorrichtung;
- Figur 2:: Vorderansicht einer Einheit nach Figur 1;
- Figur 3:: Stirnansicht von Figur 2;
- Figur 4:: Querschnitt der Figur 2 entlang der Linie A-A aus Figur 2;
- Figur 5:: Schnittdarstellung mit der Fixiereinheit in der Bereitschaftsposition;
- Figur 6:: Schnittdarstellung mit der Fixiereinheit in der ersten Arbeitslage;
- Figur 7:: Schnittdarstellung mit der Fixiereinheit in der zweiten Arbeitslage;
- Figur 8:: Einheit mit bereitgestelltem ersten Werkstück;
- Figur 9:: Einheit mit bereitgestelltem zweiten Werkstück;
- Figur 10:: Bearbeitungsstation mit Werkstück-Bereitstellungsgruppe und Werkzeugeinheit;
- Figur 11:: Bearbeitungsstation mit manueller Beschickung;
- Figur 12:: Bearbeitungsstation mit Handhabungsroboter.

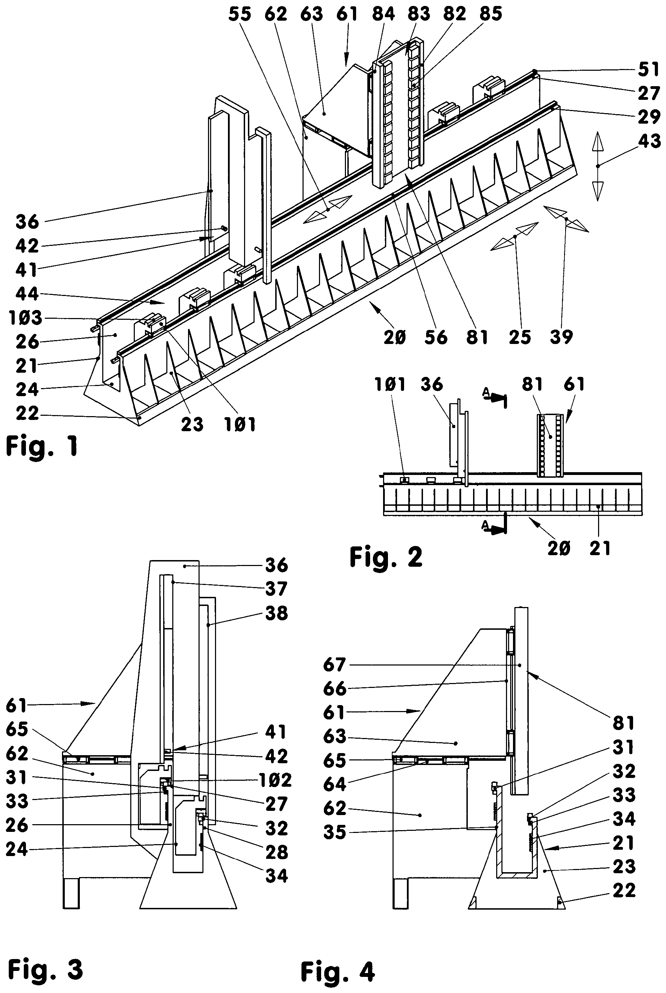

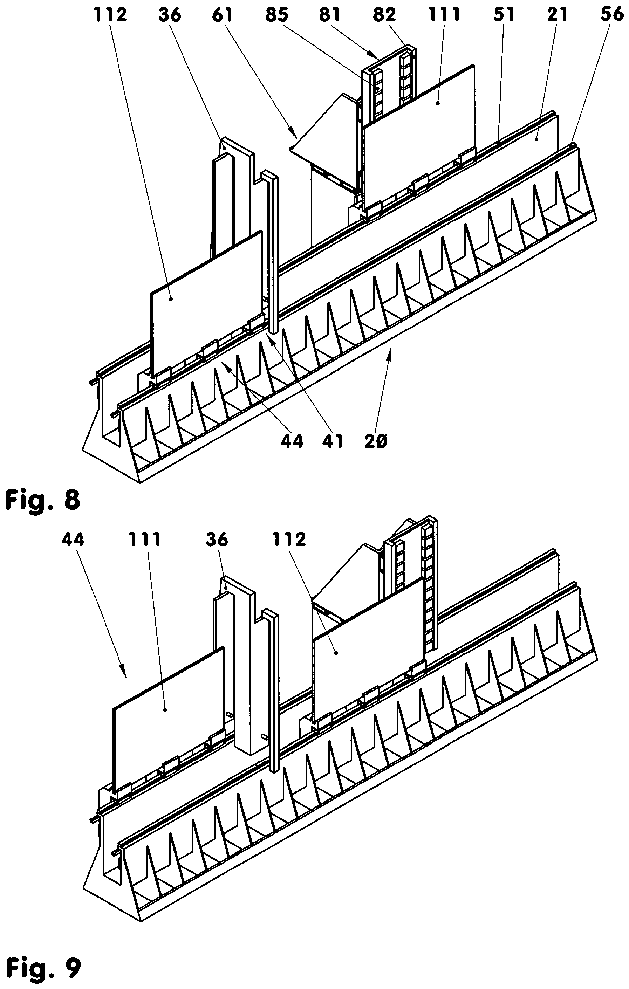

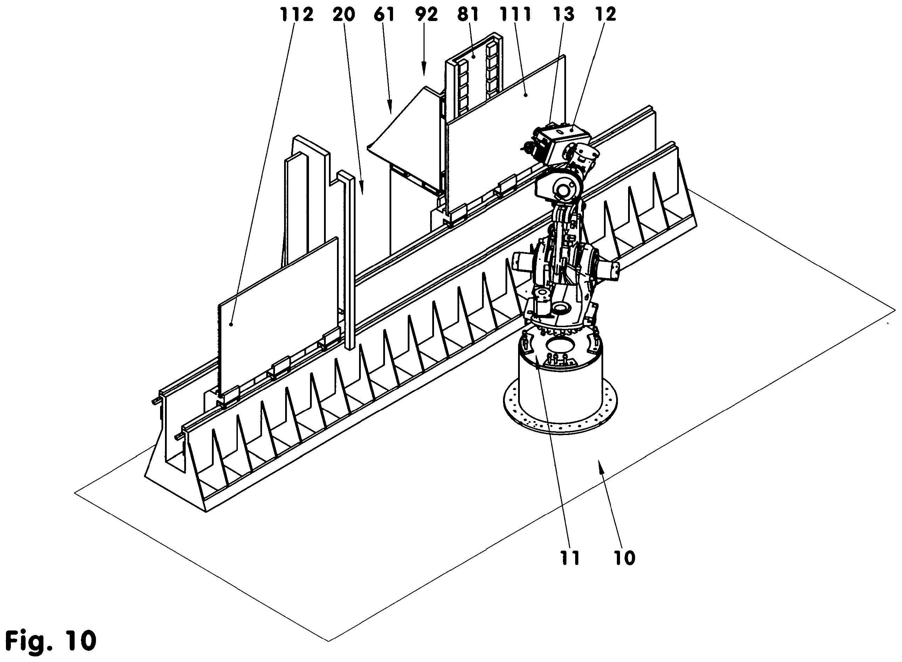

Die Figuren 1 - 9 zeigen eine Werkstück-Bereitstellungsgruppe (20) einer Bearbeitungsstation (10) mit einem Schienentragkörper (21) und mit einer Stützvorrichtung (61). Die dargestellte Werkstück-Bereitstellungsgruppe (20) ist in diesen Darstellungen als Einheit (20) mit mechanisch verbundenen Baugruppen ausgebildet. Die Figur 10 zeigt eine Bearbeitungsstation (10) mit einer derartigen Werkstück-Bereitstellungsgruppe (20) und mit einer Werkzeugeinheit (12). Bearbeitungsstationen (10) mit derartigen Einheiten (20) werden beispielsweise bei der Bearbeitung großflächiger Werkstücke (111, 112), wie z.B. Platten (111, 112) oder Brettern eingesetzt, vgl. die Figuren 8 - 10. Diese Werkstücke (111, 112) können aus Holz, Verbundmaterialien, Metall, Glas, etc. bestehen. Die Werkstücke (111, 112) werden in Längsrichtung (25) des Schienentragkörpers (21) zur Stützvorrichtung (61) gefördert. Die Stützvorrichtung (61) kontaktiert und fixiert das jeweilige Werkstück (111; 112) mittels einer Fixiereinheit (81). Hiernach kann das fixierte Werkstück (111, 112) z.B. mittels Umformverfahren, Trennverfahren, Fügeverfahren oder Beschichtungsverfahren bearbeitet werden. Auch eine Kombination zweier oder mehrerer Verfahren ist denkbar. Bei diesen Verfahren wird beispielsweise ein oder es werden mehrere werkzeugtragende Bearbeitungsroboter (11) eingesetzt, die z.B. neben dem Schienentragkörper (21) angeordnet sind.

Die in den Figuren dargestellte Einheit (20) kann als Teil einer Einzel-Bearbeitungsstation (10) ausgebildet sein oder Teilstation einer verketten Fertigung, z.B. einer Transferstraße sein. Im letztgenannten Fall kann die Stützvorrichtung (61) auch als Pufferstation oder Ausrichtstation im Materialfluss eingesetzt werden.

Der Schienentragkörper (21) ist im Ausführungsbeispiel eine verschweißte Stahlblechkonstruktion. Er kann auch als Gussteil, aus Polymerbeton, etc. hergestellt sein. Der dargestellte Schienentragkörper (21) hat zwei außenliegende Längsträger (22), die z.B. mit dem Hallenboden verankert sind. Diese Längsträger (22) sind mittels einer Vielzahl von in Längsrichtung (25) zueinander versetzt angeordneten Querblechen (23) miteinander verbunden. Die Querbleche (23) sind beispielsweise kongruent zueinander ausgebildet. Sie tragen eine in der Längsrichtung (25) orientierte, u-förmige Aufnahmerinne (24).

Die Aufnahmerinne (24) hat über ihre Länge einen konstanten Querschnitt, vgl. Figur 3, Sie ist an beiden Enden offen. Die Aufnahmerinne (24) kann auch, z.B. für eine Spanabfuhr, geneigt ausgebildet sein. Auch kann in ihr eine Spanfördervorrichtung angeordnet sein. Beispielsweise beim Einsatz an einer Holzbearbeitungsstation kann zusätzlich eine Absaugung vorgesehen sein. Die beiden z.B. vertikal angeordneten Längsseitenbleche (26, 28) der Aufnahmerinne (24) haben im Ausführungsbeispiel eine unterschiedliche Höhe. So liegt in den Darstellungen der Figuren 1 - 10 die der Stützvorrichtung (61) zugewandte erste Oberseite (27) des ersten Längsseitenblechs (26) um ein Drittel höher als die zweite Oberseite (29) des zweiten Längsseitenblechs (28). Die Oberseiten können jedoch auch in einer gemeinsamen Ebene liegen. Beide Oberseiten (27, 29) sind Teile von Längsstegen (31, 32), die im Ausführungsbeispiel jeweils in Richtung der Stützvorrichtung (61) über die Längsseitenbleche (26, 27) überstehen. Es ist auch denkbar, dass die Längsstege (31, 32) in die der Stützvorrichtung (61) abgewandte Richtung ragen. Auch können sie zueinander über der Aufnahmerinne (24) oder der Aufnahmerinne (24) abgewandt angeordnet sein.

Unterhalb der Längsstege (31, 32) sind jeweils eine schrägverzahnte Zahnstange (33) und mehrere elektrische Leiterbahnen (34) angeordnet. Diese verlaufen, von den Längsstegen (31, 32) verdeckt, entlang der gesamten Länge des Schienentragkörpers (21). Hierbei liegt die Zahnstange (33) in den Darstellungen der Figuren 1 - 10 unmittelbar unterhalb des jeweiligen Längsstegs (31, 32). Auf der Außenseite (35) des ersten Längsseitenblechs (26) liegen die Zahnstange (33) und die elektrischen Leiterbahnen (34) oberhalb der Querbleche (23).

Auf jedem der Längsstege (31; 32) ist eine Schiene (51; 56) befestigt. Eine erste Schiene (51) sitzt auf dem ersten Längssteg (31) und eine zweite Schiene (56) auf dem zweiten Längssteg (32). Im Ausführungsbeispiel sind beide Schienen (51, 56) gerade Schienen (51, 56). Die Schienenlängsrichtung (55) dieser Schienen (51, 56) ist identisch mit der Längsrichtung (25) des Schienentragkörpers (21). Mindestens zwei in der Schienenlängsrichtung (55) zueinander beabstandete, normal zur Schienenlängsrichtung (55) liegende Normalenebenen durchdringen sowohl die erste Schiene (51) als auch die zweite Schiene (56).

Die beiden Schienen (51, 56) können auch gebogen ausgebildet sein. Sie sind dann koaxial zu einer gemeinsamen Achse angeordnet. Diese gemeinsame Achse ist normal zu den die Schienenkopfflächen (52; 57) tangierenden Tragebenen der Schienen (51, 56) ausgerichtet. Diese Tragebenen sind parallel zu den Ebenen der Oberseiten (27, 29) der Längsstege (31; 32). Die jeweilige Schienenlängsrichtung (55) dieser gekrümmten Schienen (51, 56) liegt jeweils auf einer Zylindermantelfläche um die gemeinsame Achse, wobei die Zylindermantelfläche die jeweilige Schiene (51, 56) mittig durchdringt. Auch in diesem Ausführungsbeispiel durchdringen zwei, im Bereich der Schienen (51, 56) zueinander beabstandete Normalenebenen zur Schienenlängsrichtung (55) beide Schienen (51, 56). In diesem Fall sind die Normalenebenen z.B. Radialebenen durch die gemeinsame Achse.

Die jeweilige Schiene (51; 56) ist im Ausführungsbeispiel eine Führungsschiene (51; 56) für Kugelumlaufschuhe (102) mit 2-Punkt-Berührung. Jeder der Kugelumlaufschuhe (102) hat beispielsweise vier Wälzkörperreihen.

Jeder der eine Schiene (51; 56) umgreifenden Kugelumlaufschuhe (102) ist Teil eines Werkstückwagens (101). Hierbei ist im Ausführungsbeispiel jeder Werkstückwagen (101) mittels genau eines Kugelumlaufschuhs (102) entlang der jeweiligen Schiene (51; 56) geführt. Der einzelne Werkstückwagen (101) hat oberhalb des Kugelumlaufschuhs (102) eine Werkstückaufnahme (103). Beispielsweise ist an der einzelnen Werkstückaufnahme (103) eine Werkstückklemmung angeordnet. Die Länge der z.B. geraden, nutförmig ausgebildeten Werkstückaufnahme (103) entspricht der Länge des Werkstückwagens (101) in der Schienenlängsrichtung (55).

Unterhalb der Längsstege (31, 32) hat der einzelne montierte Werkstückwagen (101) eine Antriebseinheit. Diese umfasst beispielsweise Stromabnehmer, die die Leiterbahnen (34) kontaktieren sowie ein mit der Zahnstange (33) kämmendes, motorisch angetriebenes Antriebsritzel.

Am Schienentragkörper (21) ist ein Steuerportal (36) angeordnet. Dieses ist ein querstehendes, beide Schienen (51, 56) überragendes Tor mit zwei zueinander parallelen Durchlässen (37, 38). Diese Durchlässe (37, 38) haben jeweils eine rechteckige Querschnittsfläche, die breiter ist als die Breite der einzelnen Werkstückwagen (101) in der Querrichtung (39). Die Querrichtung (39) ist in diesem Ausführungsbeispiel normal zu einer vertikalen Mittenlängsebene der ersten Schiene (51; 56) orientiert. Die Höhe beider Durchlässe (37, 38) ist höher als die maximal zulässige Werkstückhöhe.

An jedem Durchlass (37; 38) ist eine Werkstück-Freigabevorrichtung (41) angeordnet. Die einzelne Werkstück-Freigabevorrichtung (41) weist einen in der Querrichtung (39) verfahrbaren Sperrstift (42) auf. Im Portal kann auch eine Lichtschranke angeordnet sein, die bei einem wartenden Werkstück (111; 112) anspricht. Beispielsweise wird die Lichtschranke bedämpft, sobald ein Werkstück (111; 112) am Sperrstift anliegt. Auch eine Messvorrichtung z.B. für die Höhe und die Dicke eines Werkstücks (111; 112) kann im Steuerportal (36) angeordnet sein.

Die Stützvorrichtung (61) ist im Ausführungsbeispiel ebenfalls am Schienentragkörper (21) angeordnet. Beispielsweise ist sie mit diesem gefügt, z.B. verschweißt. Die Stützvorrichtung (61) kann jedoch auch neben dem Schienentragkörper (21) auf dem Hallenboden stehen. Beispielsweise sind ihre Bodenverankerungen oder ihr Fundament in der Querrichtung (39) versetzt zu den Bodenverankerungen oder zum Fundament des Schienentragkörpers (21).

Die Stützvorrichtung (61) umfasst ein feststehendes Gestell (62) und eine relativ hierzu verstellbare Fixiereinheit (81). Im Ausführungsbeispiel ist auf dem Gestell (62) ein in Querrichtung (39) verfahrbarer Querschlitten (63) angeordnet. Hierzu sind beispielsweise auf dem Gestell (62) zwei Führungsschienen (64) befestigt, an denen jeweils zwei am Querschlitten (63) angeordnete Kugelumlaufschuhe (65) geführt sind. An seiner dem Schienentragkörper (21) zugewandten Stirnseite (66) trägt der Querschlitten (63) einen Vertikalschlitten (67). Dieser ist normal zur Querrichtung (39) und normal zu beiden Schienentragebenen der Schienen (51, 56) verfahrbar. Die Lagerung des Vertikalschlittens (67) am Querschlitten (63) ist analog zur Lagerung des Querschlittens (63) am Gestell (62) ausgebildet. Der Vertikalschlitten (67) trägt die Fixiereinheit (81). Bei einer Ausführung der Werkstück-Bereitstellungsgruppe (20) mit einer, beide Schienen (51, 56) kontaktierenden horizontalen Schienentragebene kann die Stützvorrichtung (61) ohne Vertikalschlitten (67) ausgebildet sein. In diesem Fall ist die Fixiereinheit (81) am Querschlitten (63) angeordnet.

Die Fixiereinheit (81) hat zwei vertikal orientierte Anschlagleisten (82). Diese begrenzen einen Haftbereich (83). Die hier bündig mit den Querseiten (84) der Fixiereinheit (81) angeordneten Anschlagleisten (82) können in der Längsrichtung (25) verstellbar sein. Beispielsweise kann damit die Größe des Haftbereichs (83) verändert werden. Gegebenenfalls kann die Fixiereinheit (81) in der Längsrichtung (25) verlängerbar sein. Hierzu können z.B. ausfahrbare Stangen eingesetzt werden.

Im Ausführungsbeispiel ist der Haftbereich (83) vertikal im Raum ausgebildet. Er kann aber auch um eine in der Längsrichtung (25) orientierte Achse geneigt ausgerichtet sein. Der Neigungswinkel zu einer vertikalen, in der Längsrichtung (25) orientierten Ebene ist beispielsweise kleiner als 15 Grad. Der Haftbereich (83) hat eine z.B. ebene Hüllfläche. Der Haftbereich (83) kann aber auch, beispielsweise beim Einsatz an einer Umformstation, ein- oder mehrachsig gewölbt ausgebildet sein.

Die Fixiereinheit (81) hat in der Darstellung der Figur 1 im Haftbereich (83) angeordnete Saugnäpfe (85). Bei Beaufschlagung dieser z.B. ausfahrbaren Saugnäpfe (85) mit Unterdruck wird ein Werkstück (111; 112) an die Fixiereinheit (81) gezogen und dort fixiert. Die Saugnäpfe (85) können alle gemeinsam, aber such z.B. einzeln oder gruppenweise aus- und einfahrbar sein. Beispielsweise bei einem gewölbt ausgebildeten Haftbereich (83) können die Saugnäpfe (85) z.B. zeilenweise, beispielsweise in Abhängigkeit des Verformungsgrades des Werkstücks (111; 112) angesteuert werden. Um das Werkstück (111; 112) vom Haftbereich (83) zu lösen, wird z.B. der Druck in den Saugnäpfen (85) auf den Umgebungsdruck erhöht.

Anstatt der Saugnäpfe (85) können z.B. bei einer Bearbeitung magnetisierbarer Werkstücke (111; 112), im Haftbereich (83) Magnete, beispielsweise in der Bauform von Elektromagneten eingesetzt werden. Zum Lösen des jeweiligen Werkstücks (111; 112) werden die Elektromagnete abgeschaltet.

Die Fixiereinheit (81) kann auch mittels einer schiefen Ebene, mittels einer kinematischen Kette, mittels eines Getriebes, etc. relativ zu den Schienen (51; 56) verfahren werden. Bei Einsatz eines Getriebes kann dieses beispielsweise als nicht umlauffähiges Gelenkviereck, z.B. als Parallelogramm, ausgebildet sein. Beim diesem Versetzen bewegt sich die Fixiereinheit (81) zwischen zwei Normalenebenen der Schienenlängsrichtung (55). Diese Normalenebenen begrenzen beispielsweise zumindest in einer Bereitschaftsposition (91), in der die Stützvorrichtung (61) ohne Kontakt zum Werkstück (111; 112) ist, die Fixiereinheit (81) in der Schienenlängsrichtung (55). Die Fixiereinheit (81) wird hierbei in einer Ebene bewegt, die durch die Querrichtung (39) und eine normal zu dieser und zur Schienenlängsrichtung (55) orientierten Höhenrichtung (43) aufgespannt wird.

Beim Einsatz der Werkstück-Bereitstellungsgruppe (20) in einem flexiblen Fertigungssystem wird das Werkstück (111; 112) beispielsweise auf einem Transportwagen der einzelnen Bearbeitungsstation (10) zugeführt. Auch eine Werkstückzufuhr mittels eines Transportbandes, mittels eines Hebezeugs, etc. ist denkbar. Das Werkstück (111; 112), z.B. eine zu bearbeitende Holzplatte, wird z.B. von einem Bediener aufgenommen. Sie wird dann in die Werkstückaufnahmen (103) von z.B. drei in Reihe auf der ersten Schiene (51) im Einsetzbereich (44) stehenden Werkstückwagen (101) eingesetzt. Das Einsetzen kann auch mittels eines Hebezeugs erfolgen. Die erste Schiene (51) ist vom Bediener aus gesehen die hintere Schiene (51). Da diese erste Schiene (51) im Ausführungsbeispiel höher liegt als die vorne liegende zweite Schiene (56), besteht beim Einsetzen des ersten Werkstücks (111) in die Werkstückwagen (101) der ersten Schiene (51) keine Kollisionsgefahr mit der zweiten Schiene (56). Nach dem Einsetzen wird das jeweilige Werkstück (111; 112) z.B. mittels Klemmen in den Werkstückaufnahmen (103) gesichert. Es steht jetzt z.B. senkrecht zur Tragebene der ersten Schiene (51) und zur Tragebene der zweiten Schiene (56). Das Werkstück (111; 112) kann auch einen geringen Schrägungswinkel, z.B. kleiner als 15 Grad, zu einer vertikalen Ebene aufweisen.

Wird die Werkstück-Bereitstellungsgruppe (20) in einer starren Transferstraße oder in einer flexiblen Transferlinie eingesetzt, wird das Werkstück (111; 112) z.B. bereits mittels der Werkstückwagen (101) in den Einsetzbereich (44) gefördert. Der Einsetzbereich (44) liegt in den Darstellungen der Figuren 1 und 8 - 10 links des Steuerportals (36).

Mittels der Werkstückwagen (101) wird beispielsweise das zunächst eingesetzte erste Werkstück (111) in Richtung des Steuerportals (36) verfahren. Hier stößt es an den Sperrstift (42) der Werkstück-Freigabevorrichtung (41) an. Diese Position des Werkstücks (111) wird beispielsweise als Referenzpunkt für die Längenermittlung des Werkstücks (111) genutzt. Hier kann das Werkstück (111) auch vermessen werden. Beispielsweise kann die Dicke und die Höhe des Werkstücks (111) ermittelt werden und an die Steuerung der Bearbeitungsstation (10) übermittelt werden.

Zur Freigabe beispielsweise des ersten Werkstücks (111) wird der Sperrstift (42) so verfahren, dass der von der ersten Schiene (51) durchdrungene Durchlass (37) freigegeben wird. Die selbstfahrenden Werkstückwagen (101) fördern das erste Werkstück in Richtung der Stützvorrichtung (61). Hierbei wird unter Berücksichtigung der Verfahrgeschwindigkeit der Werkstückwagen (101) z.B. mittels der Lichtschranke die Länge des Werkstücks (111) ermittelt.

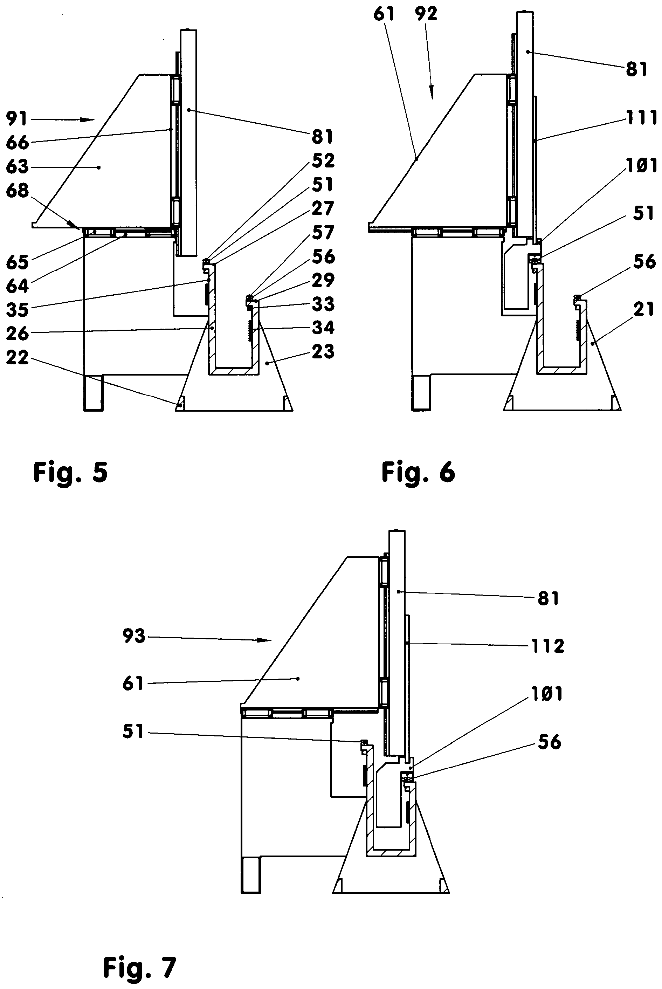

Die Stützvorrichtung (61) steht hierbei zunächst in einer Bereitschaftsposition (91), vgl. Figur 5. Die Schnittebene dieser Darstellung entspricht der Schnittebene A-A aus Figur 2. In dieser Bereitschaftsposition (91) ist der Querschlitten (63) z.B. in seine Endlage (68) zurückgefahren. Die Fixiereinrichtung (81) hat den größten Abstand von der ersten Schiene (51). Sie steht in einer Betriebsendlage. Die Stützvorrichtung (61) überdeckt weder die erste Schiene (51), noch die zweite Schiene (56). In der Bereitschaftsposition (91) ist der in der Querrichtung (39) gemessene Abstand der Fixiereinheit (81) von der Mitte der ersten Schiene (51) größer als die halbe, in der Querrichtung (39) gemessene Breite eines Werkstückwagens (101).

Sobald das erste Werkstück (111) sich in der Querrichtung (39) versetzt zur Stützvorrichtung (61) befindet, vgl. Figur 8, werden die Werkstückwagen (101) angehalten. Der Querschlitten (63) mit der Fixiereinheit (81) wird in Richtung der ersten Schiene (51) verfahren, bis sich die Anschlagleisten (82) an das Werkstück (111) anlegen. Die Saugnäpfe (85) werden mit einem Unterdruck beaufschlagt, sodass der Haftbereich (83) an das erste Werkstück (111) angepresst wird. Die Fixiereinheit (81) befindet sich jetzt in einer ersten Arbeitslage (92), vgl. Figur 6. Die Fixiereinheit (81) liegt flächig am ersten Werkstück (111) an und hält dieses fest.

Zur Bearbeitung des ersten Werkstücks (111) wird beispielsweise ein auf dem Hallenboden stehender Bearbeitungsroboter (11) eingesetzt, vgl. Figur 10. Dieser hat eine Werkzeugeinheit (12), die relativ zu den Schienen (51, 56) schwenkbar und/oder verfahrbar ist. Im Ausführungsbeispiel hat die Werkzeugeinheit (12) mehrere angetriebene Werkzeuge (13), z.B. einen Bohrer, einen Fräser, etc. Außerdem kann der Bearbeitungsroboter (11) eine Prüf- oder Messvorrichtung aufweisen, um z.B. die Position des Werkstücks (111) vor der Bearbeitung genau zu ermitteln.

Bei der Bearbeitung verfährt die Werkzeugeinheit (12) mit dem Werkzeug (13) auf die vorgegebene Position des Werkstücks (111). Diese kann beispielsweise im unteren Bereich des Werkstücks (111) liegen. U.a. aufgrund der gegenüber der zweiten Schiene (56) erhöhten ersten Schiene (51) besteht keine Gefahr, dass die Werkzeugeinheit (12) mit der ersten Schiene (56) kollidiert. Falls z.B. ein Durchbohren des Werkstücks (111) vorgesehen ist, kann ein im Arbeitsbereich liegende Saugnapf (85) zurückgefahren werden.

Nach Abschluss der Bearbeitung verfährt die Werkzeugeinheit (12) wieder in ihre Ausgangsposition. Der Unterdruck an den Saugnäpfen (85) wird abgeschaltet und die Fixiereinheit (81) verfährt mittels des Querschlittens (63) und ggf. des Vertikalschlittens (67) in ihre Bereitschaftsposition (91). Die Werkstückwagen (101) können - je nach vorgesehenen Materialfluss zur nächsten Bearbeitungsposition in der Halle - entweder das Werkstück (111) zurück in den Einsetzbereich (44) oder in die entgegengesetzte Richtung fördern.

Bereits unmittelbar nach der Freigabe des ersten Werkstücks (111) auf der ersten Schiene (51) wird beispielsweise ein zweites Werkstück (112) in z.B. auf der zweiten Schiene (56) im Einsetzbereich (44) stehende Werkstückwagen (101) eingesetzt. Dieses zweite Werkstück (112) wird gegen den Sperrstift (42) verfahren und vermessen, wie im Zusammenhang mit dem ersten Werkstück (111) beschrieben. Sobald die Werkzeugeinheit (12) in ihrer Ausgangslage steht und/oder sobald die Fixiervorrichtung (81) ihre Bereitschaftsposition (91) erreicht hat, können die Werkstückwagen (101) des zweiten Werkstücks (112) freigegeben werden. Das zweite Werkstück (112) wird in Richtung der Stützvorrichtung (61) verfahren. Die Verfahrzeiten des ersten Werkstücks (111) und des zweiten Werkstücks (112) überlappen sich. Die Bearbeitungsstation (10) hat damit nur eine geringe Nebenzeit. Die Rüstzeit des einen Werkstücks (111; 112) liegt innerhalb der Hauptzeit des anderen Werkstücks (112; 111). Somit wird eine hohe Ausbringungsrate erreicht. Es ergibt sich eine geringe maschinenbezogene Totzeit. Dies ist die Stillstandszeit der Werkzeugeinheit (12) zwischen der Bearbeitung zweier Werkstücke (111, 112). Damit wird ein hoher Auslastungsgrad und Nutzungsgrad der Bearbeitungsstation (10) erreicht. Der Gesamtauftrag, der die Bearbeitung mehrerer Werkstücke (111, 112) umfasst, benötigt nur eine niedrige Durchlaufzeit, da die Nebenzeiten der einzelnen Werkstücke (111, 112) sich überlappen.

Sobald sich zweite Werkstück (112) in Querrichtung (39) versetzt zur Stützvorrichtung (61) befindet, vgl. Figur 9, wird bei angehaltenen Werkstückwagen (101) die Fixiereinheit (81) verfahren. Hierbei verfährt im Ausführungsbeispiel der Querschlitten (63) beispielsweise so weit, bis er den Abstand in Querrichtung (39) von der zweiten Schiene (56) erreicht, den er in der Bereitschaftsposition (91) von der ersten Schiene (51) hat. Dieser Abstand wird im Folgenden als Mindestabstand zur Freigabe bezeichnet. Anschließend wird der Vertikalschlitten (67) mit der Fixiereinheit (81) nach unten verfahren. Diese beiden Verfahrbewegungen können sich auch bereichsweise überlappen. Nun kann der Querschlitten (63) weiter in Richtung des zweiten Werkstücks (112) verfahren werden. Nach dem Ansaugen des zweiten Werkstücks (112) befindet sich die Fixiereinheit (81) in einer zweiten Arbeitslage (93), vgl. Figur 7. Das Werkstück (112) wird unverrückbar mittels der Saugnäpfe (85) angezogen und stützt sich an den Anschlagleisten (82) ab. In dieser zweiten Arbeitslage (93) überdeckt die Stützvorrichtung (61) die erste Schiene (51). Sie liegt oberhalb der ersten Schiene (51). Die zweite Schiene (56) wird nicht überdeckt. Die Fixiereinheit (81) der Stützvorrichtung (61) steht in Richtung der ersten Schiene (51) versetzt neben der zweiten Schiene (56). In dieser zweiten Arbeitslage (93) steht die Fixiereinheit (81) im Arbeitsraum beispielsweise parallel zu ihrer Lage in der ersten Arbeitslage (92).

Die Bearbeitung des zweiten Werkstücks (112) erfolgt analog zur oben beschriebenen Bearbeitung des ersten Werkstücks (111). Sobald nach Beendigung der Bearbeitung die Fixiereinheit (81) wieder den Mindestabstand zur Freigabe erreicht hat, kann das zweite Werkstück (112) weiter oder zurück in den Einsetzbereich (44) gefördert werden. Sobald die Fixiereinheit (81) in der Bereitschaftsposition (91) steht, kann ein neues erstes Werkstück (111) in den Arbeitsraum gefördert werden.

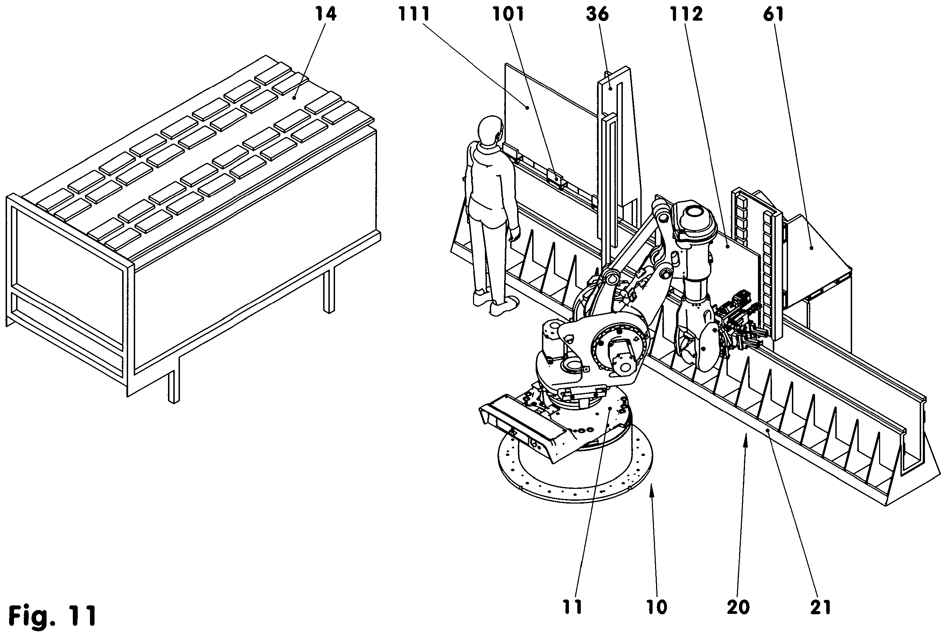

Die Figur 11 zeigt eine Bearbeitungsstation (10) mit manueller Beschickung. In dieser Darstellung ist ein zweites Werkstück (112) kurz vor der Bearbeitung. Ein erstes Werkstück (111) ist an dieser Bearbeitungsstation (10) fertig bearbeitet. Mittels der Werkstückwagen (101) ist es in den Einsetzbereich (44) zurückgefahren. Hier wird es beispielsweise von Hand entnommen und auf einem Magazin (14) abgelegt. Anschließend kann ein weiteres zu bearbeitendes Werkstück (111) z.B. von einem hier nicht dargestellten Stapel abgenommen werden im Einsetzbereich (44) in die Werkstückaufnahmen der Werkstückwagen (101) eingesetzt werden.

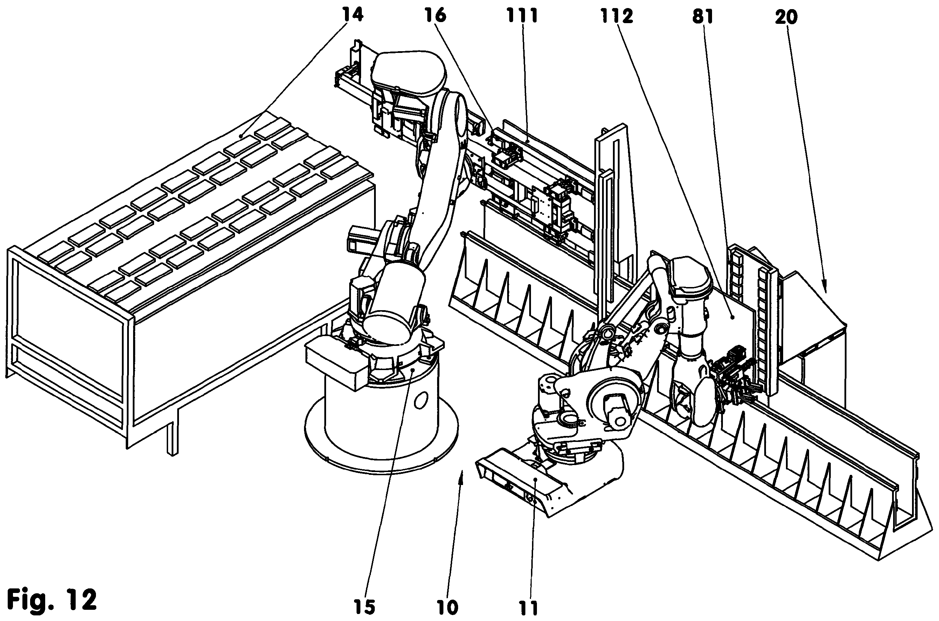

In der Figur 12 ist die Beschickung und die Entnahme der Werkstücke (111; 112) mittels eines Handhabungsroboters (15) dargestellt. Der Handhabungsroboter (15) hat hierfür eine Greifvorrichtung (16). Mittels dieser Greifvorrichtung (16) wird ein zu bearbeitendes Werkstück (111; 112) z.B. mittels Saugelementen von einem Stapel abgehoben und im Einsetzbereich (44) auf die Werkstückwagen (101) aufgesetzt. Auch in diesem Ausführungsbeispiel wird das bearbeitete Werkstück (111; 112) zurück in den Einsetzbereich (44) verfahren. Hier wird das Werkstück (111; 112) mittels des Handhabungsroboters (15) entnommen und in einem Magazin (14) der fertig bearbeiteten Werkstücke (111; 112) abgelegt. Dieses Magazin wird z.B. anschließend zu einer im Materialfluss nachfolgenden Bearbeitungsstation gefördert.

### Bezugszeichenliste:

- 10: Bearbeitungsstation
- 11: Bearbeitungsroboter
- 12: Werkzeugeinheit
- 13: Werkzeuge
- 14: Magazin
- 15: Handhabungsroboter
- 16: Greifvorrichtung

- 20: Werkstück-Bereitstellungsgruppe, Einheit
- 21: Schienentragkörper
- 22: Längsträger
- 23: Querbleche
- 24: Aufnahmerinne
- 25: Längsrichtung
- 26: Längsseitenblech, erstes Längsseitenblech
- 27: erste Oberseite
- 28: Längsseitenblech, zweites Längsseitenblech
- 29: zweite Oberseite

- 31: erster Längssteg
- 32: zweiter Längssteg
- 33: Zahnstange
- 34: Leiterbahnen
- 35: Außenseite von (26)
- 36: Steuerportal
- 37: Durchlass
- 38: Durchlass
- 39: Querrichtung

- 41: Werkstück-Freigabevorrichtung
- 42: Sperrstift
- 43: Höhenrichtung
- 44: Einsetzbereich

- 51: Schiene, erste Schiene
- 52: Schienenkopffläche

- 55: Schienenlängsrichtung
- 56: Schiene, zweite Schiene
- 57: Schienenkopffläche

- 61: Stützvorrichtung
- 62: Gestell
- 63: Querschlitten
- 64: Führungsschienen
- 65: Kugelumlaufschuhe
- 66: Stirnseite von (63)
- 67: Vertikalschlitten
- 68: Endlage von (63)

- 81: Fixiereinheit
- 82: Anschlagleisten
- 83: Haftbereich
- 84: Querseiten von (81)
- 85: Saugnäpfe

- 91: Bereitschaftsposition, Betriebsendlage
- 92: erste Arbeitslage
- 93: zweite Arbeitslage

- 101: Werkstückwagen
- 102: Kugelumlaufschuh
- 103: Werkstückaufnahme

- 111: Werkstück, erstes Werkstück, Platte
- 112: Werkstück, zweites Werkstück, Platte

## Patentansprüche

1. Werkstück-Bereitstellungsgruppe (20) für eine Bearbeitungsstation (10) mit einem mindestens eine Schiene (51; 56) tragenden Schienentragkörper (21) und mit einer, eine Fixiereinheit (81) aufweisenden Stützvorrichtung (61),
- wobei der Schienentragkörper (21) mindestens eine zweite, zur erstgenannten Schiene (51; 56) parallele oder koaxiale Schiene (56; 51) trägt,
- wobei mindestens zwei normal zur Schienenlängsrichtung (55) orientierte, zueinander in der Schienenlängsrichtung (55) beabstandete Normalenebenen die erste Schiene (51; 56) und die zweite Schiene (56; 51) durchdringen,
- wobei die Fixiereinheit (81) zwischen den genannten Normalenebenen relativ zu den Schienen (51, 56) zwischen einer Bereitschaftsposition (91), einer ersten Arbeitslage (92) und einer zweiten Arbeitslage (93) verfahrbar ist,
- wobei in der ersten Arbeitslage (92) ein entlang der ersten Schiene (51; 56) führbares Werkstück (111) mittels der Fixiereinheit flächig anliegend fixierbar ist und
- wobei in der zweiten Arbeitslage (93) ein entlang der zweiten Schiene (56; 51) führbares Werkstück (112) mittels der Fixiereinheit (81) flächig anliegend fixierbar ist, **dadurch gekennzeichnet,**
- **dass** die Fixiereinheit (81) höhenverstellbar ist.

2. Werkstück-Bereitstellungsgruppe (20) nach Anspruch 1,
**dadurch gekennzeichnet, dass** die Stützvorrichtung (61) am Schienentragkörper (21) befestigt oder angeformt ist.

3. Werkstück-Bereitstellungsgruppe (20) nach Anspruch 1,
**dadurch gekennzeichnet, dass** die Raumlage der Fixiereinheit (81) in der ersten Arbeitslage (92) parallel zur Raumlage der Fixiereinheit (81) in der zweiten Arbeitslage (93) ist.

4. Werkstück-Bereitstellungsgruppe (20) nach Anspruch 1,
**dadurch gekennzeichnet, dass** die Stützvorrichtung (61) einen normal zu einer vertikalen Mittenlängsebene der ersten Schiene (51; 56) verfahrbaren, die Fixiereinheit (81) tragenden Querschlitten (63) aufweist.

5. Werkstück-Bereitstellungsgruppe (20) nach Anspruch 1,
**dadurch gekennzeichnet, dass** die erste Schiene (51; 56) und die zweite Schiene (56; 51) zueinander höhenversetzt sind.

6. Werkstück-Bereitstellungsgruppe (20) nach Anspruch 1,
**dadurch gekennzeichnet, dass** am Schienentragkörper (21) eine Werkstück-Freigabevorrichtung (41) angeordnet ist.

7. Werkstück-Bereitstellungsgruppe (20) nach Anspruch 1,
**dadurch gekennzeichnet, dass** sowohl entlang der ersten Schiene (51; 56) als auch entlang der zweiten Schiene (56; 51) Werkstückwagen (101) verfahrbar sind.

8. Werkstück-Bereitstellungsgruppe (20) nach Anspruch 1,
**dadurch gekennzeichnet, dass** sie Teil eines Werkstückbearbeitungs- und -transfersystems ist.

9. Bearbeitungsstation (10) mit einer Werkstück-Bereitstellungsgruppe (20) nach Anspruch 1 und mit einer verfahrbaren und/oder schwenkbaren Werkzeugeinheit (12).

## Claims

1. A workpiece-providing assembly (20) for a processing station (10) having a rail-bearing body (21), which bears at least one rail (51; 56), and having a supporting device (61), which has a fixing unit (81),
- wherein the rail-bearing body (21) bears at least one second rail (56; 51), which is parallel to or coaxial with the first-mentioned rail (51; 56),
- wherein at least two normal planes, which are oriented normally to the rail longitudinal direction (55) and are mutually spaced in the rail longitudinal direction (55), extend through the first rail (51; 56) and the second rail (56; 51),
- wherein the fixing unit (81) is movable between the said normal planes relative to the rails (51, 56) between a standby position (91), a first working position (92), and a second working position (93),
- wherein, in the first working position (92), a workpiece (111) that can be guided along the first rail (51; 56) is fixable in planar contact by means of the fixing unit, and
- wherein, in the second working position (93), a workpiece (112) that can be guided along the second rail (56; 51) is fixable in planar contact by means of the fixing unit (81), **characterised in that**
- the fixing unit (81) is height-adjustable.

2. The workpiece-providing assembly (20) according to Claim 1, **characterised in that** the supporting device (61) is fastened to or integrally formed on the rail-bearing body (21).

3. The workpiece-providing assembly (20) according to Claim 1, **characterised in that** the spatial position of the fixing unit (81) in the first working position (92) is parallel to the spatial position of the fixing unit (81) in the second working position (93).

4. The workpiece-providing assembly (20) according to Claim 1, **characterised in that** the supporting device (61) has a transverse slide (63), which is movable normally to a vertical central longitudinal plane of the first rail (51; 56) and bears the fixing unit (81).

5. The workpiece-providing assembly (20) according to Claim 1, **characterised in that** the first rail (51; 56) and the second rail (56; 51) are vertically offset from one another.

6. The workpiece-providing assembly (20) according to Claim 1, **characterised in that** a workpiece-releasing device (41) is arranged on the rail-bearing body (21).

7. The workpiece-providing assembly (20) according to Claim 1, **characterised in that** workpiece carriages (101) are movable both along the first rail (51; 56) and along the second rail (56; 51).

8. The workpiece-providing assembly (20) according to Claim 1, **characterised in that** it is part of a workpiece processing and transfer system.

9. A processing station (10) having a workpiece-providing assembly (20) according to Claim 1 and having a movable and/or pivotable tool unit (12).

## Revendications

1. Groupe de mise à disposition (20) d'une pièce à usiner, destiné à un poste d'usinage (10), doté d'au moins un corps porteur (21) de rail, portant au moins un rail (51 ; 56) et pourvu d'un dispositif de soutien (61) comportant une unité de fixation (81),
- le corps porteur (21) de rail portant au moins un deuxième rail (56 ; 51), parallèle ou coaxial au premier rail (51 ; 56) précédemment cité,
- au moins deux plans normaux orientés à la normale par rapport à la direction longitudinale (55) des rails, mutuellement écartés dans la direction longitudinale (55) des rails traversant le premier rail (51 ; 56) et le deuxième rail (56 ; 51),
- l'unité de fixation (81) étant déplaçable entre les plans normaux cités, par rapport aux rails (51, 56), entre une position de mise à disposition (91), une première situation de travail (92) et une deuxième situation de travail (93),
- dans la première situation de travail (92), une pièce à usiner (111) susceptible d'être guidée le long du premier rail (51 ; 56) pouvant être fixée au moyen de l'unité de fixation, en étant adjacente à plat et
- dans la deuxième situation de travail (93), une pièce à usiner (112) susceptible d'être guidée le long du deuxième rail (56 ; 51) pouvant être fixée au moyen de l'unité de fixation (81) en étant adjacente à plat, **caractérisé**
- **en ce que** l'unité de fixation (81) est réglable en hauteur.

2. Groupe de mise à disposition (20) d'une pièce à usiner selon la revendication 1, **caractérisé en ce que** le dispositif de soutien (61) est fixé ou surmoulé sur le corps porteur (21) de rail.

3. Groupe de mise à disposition (20) d'une pièce à usiner selon la revendication 1, **caractérisé en ce que** la situation dans l'espace de l'unité de fixation (81) dans la première situation de travail (92) est parallèle à la situation dans l'espace de l'unité de fixation (81) dans la deuxième situation de travail (93).

4. Groupe de mise à disposition (20) d'une pièce à usiner selon la revendication 1, **caractérisé en ce que** le dispositif de soutien (61) comporte un chariot transversal (63) déplaçable à la normale d'un plan longitudinal médian vertical du premier rail (51 ; 56), portant l'unité de fixation (81).

5. Groupe de mise à disposition (20) d'une pièce à usiner selon la revendication 1, **caractérisé en ce que** le premier rail (51 ; 56) et le deuxième rail (56 ; 51) sont mutuellement décalés en hauteur.

6. Groupe de mise à disposition (20) d'une pièce à usiner selon la revendication 1, **caractérisé en ce que** sur le corps porteur (21) de rail est placé un dispositif de libération (41) de la pièce à usiner.

7. Groupe de mise à disposition (20) d'une pièce à usiner selon la revendication 1, **caractérisé en ce que** des chariots de pièces à usiner (101) sont déplaçables aussi bien le long du premier rail (51 ; 56) que le long du deuxième rail (56 ; 51).

8. Groupe de mise à disposition (20) d'une pièce à usiner selon la revendication 1, **caractérisé en ce qu'**il est une partie intégrante d'un système d'usinage et de transfert de pièces à usiner.

9. Poste d'usinage (10), doté d'un groupe de mise à disposition (20) d'une pièce à usiner selon la revendication 1 et d'une unité d'outils (12) déplaçable et / ou pivotante.
